# EUROPEAN PATENT APPLICATION

(11) **EP 3 890 375 A1**
(43) Date of publication of application: **06.10.2021**
(21) Application number: 21163779.8
(22) Date of filing: 19.03.2021
(51) Int. Cl.: H04W 4/80

(54) **BLUETOOTH MULTIPOINT ALGORITHM AND PRIVATE NOTIFICATIONS**

(30) Priority: 01.04.2020 US 202016837021
(71) Applicant: Google LLC, Mountain View, CA 94043 (US)
(72) Inventor: TOME, Basheer, Mountain View, CA California 94043 (US); WARAICH, Sandeep Singh, Mountain View, CA California 94043 (US); LI, Chun Yat Frank, Mountain View, CA California 94043 (US)
(74) Representative: Maikowski & Ninnemann Patentanwälte Partnerschaft mbB

(57) **Abstract**

The present disclosure provides systems and methods for wirelessly coupling one or more accessories with a host device. The one or more accessories may be classified by the host device as primary, saved, or unsaved devices. Primary and saved devices may automatically couple to the host device via a short range wireless communications interface. Thus, the host device may simultaneously be coupled to one or more accessories. The host device may output first content to a first accessory, such as a saved accessory. The host device may receive second content and output the second content to a second accessory while simultaneously outputting the first content to the first accessory.

## Description

### BACKGROUND

Many devices provide for wirelessly connecting to another device. For example, a smartphone may be connected via short range wireless pairing to a pair of earbuds such that the smartphone may output content to earbuds. When a user wants to output content to a different device or accessory, such as a car stereo, the user may provide an input to the smartphone to switch the device intended to receive the output. For example, the user may select the car stereo, instead of the earbuds, in a list of devices detected for output. Once selected, the smartphone may disconnect from the earbuds and connect to the car stereo.

Once connected, content from the smartphone may be output to the car stereo instead of the earbuds. For example, the content may be music streaming on the smartphone. When the smartphone receives a message, the smartphone may output content to the car stereo alerting the user of the message. For example, the smartphone may output an audio or text notification to the car stereo or dashboard display. The notification may interrupt the music being played on the car stereo, and be audible/visible to anyone in the car.

While accessories, such as earbuds, are capable of wirelessly connecting to host devices, such as smartphones or laptops, they are traditionally only capable of connecting to a single host device at a given time. This can be cumbersome and/or embarrassing for the user in some situations. For example, earbuds may playback content, such as music, received from a paired smartphone. The user may simultaneously operate a second device. For example, the user may begin streaming a video on a laptop, expecting the audio from the video to play through the earbuds. However, because the laptop is not paired with the earbuds, the audio content associated with the video may begin playing aloud. This may be embarrassing to the user, for example, if the user is in a library or other quiet public setting. If the user wants the audio from the video playing on the laptop to playback on the earbuds, the user typically must disconnect the earbuds from the smartphone and then connect the earbuds to the laptop.

### BRIEF SUMMARY

The present disclosure provides for a host device being simultaneously wirelessly connected to a plurality of accessories, wherein different content may be output to one or more of the plurality of accessories. For example, if the host is streaming first content to a first accessory, such as playing music on a wireless speaker, and the host receives a message, the host may transmit a notification to earbuds for private playback to only the user without interrupting the music content being output by the wireless speaker.

The present disclosure further provides for simultaneously coupling an accessory to multiple host devices. In this regard, content may be automatically output to the accessory from any of the multiple connected host devices without need for disconnecting host devices and reconnecting others.

One aspect of this disclosure provides for a host device comprising a short range communications interface, a memory categorically storing an indication of one or more accessories, including at least one primary device and one or more saved secondary devices, and one or more processor coupled to the memory. The one or more processors are configured to transmit first content to any of the one or more accessories for output, receive second content, determine that the second content is private content, and transmit the second content to the primary device for output only by the primary device. The one or more processors may be further configured to automatically connect, via short-range wireless pairing, to the primary device and at least one of the one or more saved secondary devices.

Transmitting the second content to the primary device and transmitting the first content to at least one of the one or more saved second devices may occur simultaneously. Transmitting the first content may occur on a first channel and transmitting the second content may occur on a second channel, the first channel being different than the second channel. Transmitting the second content to the primary device for output only by the primary device may occur without disrupting output of the first content by the one or more accessories.

The indications of the one or more accessories may further includes a category of unsaved devices. The primary device may be a first accessory connected to the host device via short-range wireless pairing and the one or more saved secondary devices may include at least one subsequent accessory connected to the host device via short-range wireless pairing after the first accessory is connected to the host device. Determining that the second content is private may include determining that the received second content is a message directed to a user of the host device.

Another aspect of the disclosure provides for a method for transmitting content to multiple devices, comprising storing, categorically by the one or more processors coupled to a memory, an indication of one or more accessories, including at least one primary device and one or more saved secondary devices, transmitting, by the one or more processors, first content to any of the one or more accessories for output, receiving, by the one or more processors, second content, determining, by the one or more processors, that the second content is private content, transmitting, by the one or more processors, the second content to the primary device for output only by the primary device.

Yet another aspect of the disclosure provides for a non-transitory computer-readable medium storing instructions, which when executed by one or more processors, cause the one or more processors to categorically store an indication of one or more devices, including at least one primary device and one or more saved secondary devices, transmit first content to any of the one or more accessories for output, receive second content, determine that the second content is private content, transmit the second content to the primary device for output only by the primary device.

### BRIEF DESCRIPTION OF THE DRAWINGS

Figure 1 is a pictorial diagram of an example system in accordance with aspects of the disclosure.
Figure 2 is a functional block diagram of an example system in accordance with aspects of the disclosure.
Figure 3 is a pictorial diagram of the example system of Figure 2 in accordance with aspects of the disclosure.
Figure 4 is a pictorial diagram of an example system in accordance with aspects of the disclosure.
Figure 5 is a pictorial diagram of an example system in accordance with aspects of the disclosure.
Figure 6 is a functional block diagram of an example system in accordance with aspects of the disclosure.
Figure 7 is a pictorial diagram of the example system of Figure 6 in accordance with aspects of the disclosure.
Figure 8 is a flow diagram illustrating an example method in accordance with aspects of the disclosure.
Figure 9 is a flow diagram illustrating an example method in accordance with aspects of the disclosure.

### DETAILED DESCRIPTION

The systems and methods described herein relate to a host device that may simultaneously couple to one or more accessories. The accessories may be coupled to the host device via a short range communications interface. For example, the short range communications interface may be a short range wireless antenna. The one or more accessories may be classified as primary, saved, or unsaved accessories. The primary accessory may be, for example, the first accessory coupled to the host device. The saved accessories, or secondary accessories, may be the accessories coupled to the host device after the primary accessory is connected to the host device. In some examples, a user may determine whether an accessory is paired and how the accessory is categorized. For example, the user may connect accessories to the host device in any order. Once connected, the user may designate the accessory as "saved" or "primary" or any other category of accessory. An unsaved accessory may be an accessory that has not been previously paired or saved to a list of connected accessories. The host device may automatically wirelessly connect to the primary and saved accessories when the accessories and host device are within the range of the short range communications interface. The host device may connect to one or more of the accessories without receiving user input. According to some examples, the host device may remain connected to each of the primary, saved, and unsaved accessories. For example, the host device may remain connected to the accessories as long as the accessories are within the range of the communications interface. Additionally or alternatively, the host device may remain connected to the accessories even though it connects to additional accessories. Thus, the host device may be able to switch which accessory to output content to without user input.

In addition or in the alternative to categorizing accessories as primary, saved, or unsaved, accessories may also be categorized in other ways. As one example, the accessories can be categorized as "private" or "shared." A private accessory may be an accessory intended to receive private content. By way of example, a private accessory may be an accessory that typically outputs information only to a primary user. According to some examples, earbuds or a smartwatch may be a private accessory. A shared accessory may be an accessory that typically outputs information to anyone within audio, visual, or other output range of the accessory. By way of example, wireless speakers or displays, short range wireless stereos, etc. may be shared accessories.

The host device may output first content, such as music or other audio, to a first accessory, wherein the first accessory is categorized as a saved accessory. The host device may also receive, e.g., through a network connection with a remote host device, second content different from the first content. For example, the second content may be a message or other notification. The second content may be received at the host device at the same time the host device is outputting the first content to the first accessory. The host device may determine that the second content is private content, such that it should only be provided to a user of the host device as opposed to other individuals in the company of the user. The second content may be output only to a second accessory, such as the primary accessory.

Content being output by the host device may be categorized as private or public. Private content may be content intended for the user of the host device only. Private content may be output by the host device to only the primary accessory or an accessory categorized as a private accessory. For example, messages, such as text messages or e-mails, may be categorized as private content. Thus, the messages may be output to the primary accessory or any accessory categorized as private. Public content may be intended or acceptable for individuals nearby the user of the host device to hear or access. Public content may be output by the host device to any of the connected accessories. Music or other audio content may be categorized as public content. Thus, the music or other audio may be output to any connected accessory, regardless of whether the accessory is categorized as primary, saved, unsaved, private, or shared.

An accessory may simultaneously couple to one or more host devices via a short range communications interface. The accessory may receive content from each of the host devices. For example, the accessory may automatically receive first content from a first host device. The accessory may automatically receive second content from a second host device once the first host device is no longer outputting content. Thus, the accessory may receive the second content from the second host device without having to disconnect from the first host device.

By way of example only, a pair of earbuds or other accessory worn by a user may be coupled to multiple host devices at a given time, such as both the user's mobile phone and laptop. The earbuds or other accessory may receive content from a first host device. For example, the accessory may output music or other audio content streamed through the mobile phone. A second host device, such as the laptop, may begin streaming music. According to some examples, when the music streaming from the first host device is paused or stopped, the accessory may receive the content from the second host device. In such an example, the accessory may output the music from the second host device. Additionally or alternatively, the accessory may receive the content from the second host device while the music streaming from the first host device is still being transmitting. In such an example, the accessory may output the music from the second host device. In some examples, the accessory may receive an input from the user, such as touch input, voice command, inertial movement, such as shaking, etc. The input may be a command to adjust playback of the audio content, such as adjusting the volume, skipping a song, pausing, etc. The adjusted playback is performed on the accessory.

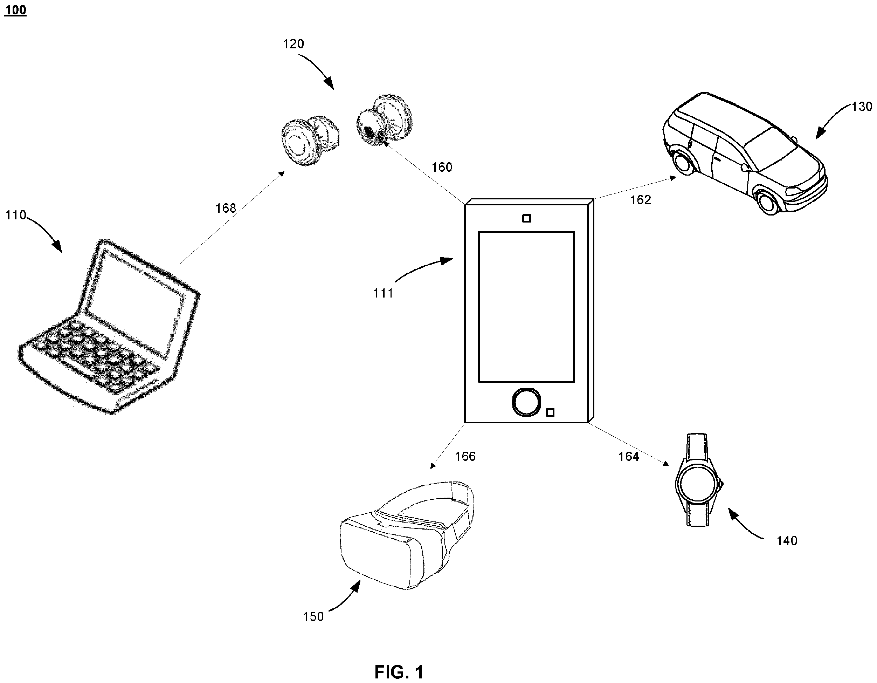

Figure 1 illustrates an example system 100 of host devices and accessories connected via a short range communications interface. The host devices may be, for example, a smartphone 111, a laptop computer 110, or any of a variety of other host devices, such as gaming systems, tablets, etc. The host devices 111, 110 may each have a short range wireless communications interface. The short range communications interface may include, for example, a wireless network antenna, transceiver, etc. The short range communications interface may allow smartphone 111 and laptop computer 110 to wirelessly connect to the accessories. The accessories may include a pair of earbuds 120, a car 130, a smart watch 140, and an augmented reality and/or virtual reality headset 150, or any of a variety of other accessories, such as fitness trackers, wireless speakers, glasses, head-mountable displays, tablets, game consoles, motorcycle helmets, etc. Each accessory may include a short range communications interface that allows the accessory to be coupled to the host device. The wireless coupling may be established using any of a variety of techniques, such as Bluetooth, Bluetooth low energy (BLE), etc. The accessories may be categorized as primary, saved, or unsaved. According to some examples, the accessories may additionally or alternatively be categorized as private or shared accessories. The accessories may be categorized based on user input, the order the accessories are connected to the host device, etc.

The host devices may be wirelessly connected to one or more accessories simultaneously. The host device may, according to some examples, automatically connect to the primary and saved accessories once the primary and saved accessories are within range of the short range communications interface. The host device may remain connected to the primary and saved accessories as long as the primary and saved accessories remain within range of the short range communications interface.

For example, smartphone 111 may be connected to earbuds 120 via wireless connection 160, car 130 via wireless connection 162, smart watch 140 via wireless connection 164, and headset 150 via wireless connection 166. According to some examples, smartphone 111 may be wirelessly connected to earbuds 120, car 130, smartwatch 140, and headset 150 simultaneously when all the accessories are within the range of the wireless network antenna. In some examples, smartphone 111 may only be connected to earbuds 120 and smartwatch 140, for example, due to range of the wireless network antenna. Thus, smartphone 111 may be wirelessly coupled to any number of accessories within the range of wireless network antenna.

Laptop 110, as a host device, may be wireless connected to earbuds 120 via wireless connection 168. While not shown, laptop 110 may be capable of connecting to additional accessories, such as smartwatch 140.

Earbuds 120, as shown, may be connected to both smartphone 111 and laptop 110. Thus, the accessories may be capable of wirelessly connecting to one or more host devices simultaneously.

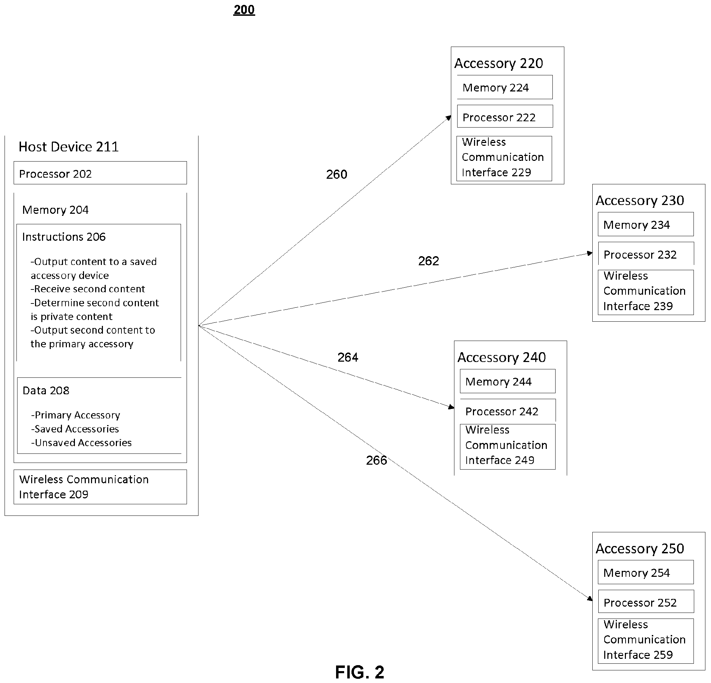

Figure 2 illustrates an example system 200 in which the features described above may be implemented. It should not be considered as limiting the scope of the disclosure or usefulness of the features described herein. In this example, the system 200 may include host device 211 and accessories 220, 230, 240, 250. Host device 211 may contain one or more processors 202, memory 204, instructions 206, data 208, and an antenna 209. The host device 211 may be able to communicate with accessories 220, 230, 240, 250 via a short-range wireless communication interfaces.

The one or more processors 202 may be any conventional processors, such as commercially available microprocessors. Alternatively, the one or more processors may be a dedicated device such as an application specific integrated circuit (ASIC) or other hardware-based processor. Although Fig. 2 functionally illustrates the processor, memory, and other elements of host device 211 as being within the same block, it will be understood by those of ordinary skill in the art that the processor, computing device, or memory may actually include multiple processors, computing devices, or memories that may or may not be stored within the same physical housing. Similarly, the memory may be a hard drive or other storage media located in a housing different from that of host device 211. Accordingly, references to a processor or computing device will be understood to include references to a collection of processors or computing devices or memories that may or may not operate in parallel.

Memory 204 may store information that is accessible by the processors 202, including instructions 206 that may be executed by the processors 202, and data 208. The memory 204 may be of a type of memory operative to store information accessible by the processors 202, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. The subject matter disclosed herein may include different combinations of the foregoing, whereby different portions of the instructions 206 and data 208 are stored on different types of media.

Data 208 may be retrieved, stored or modified by processors 202 in accordance with the instructions 206. For instance, although the present disclosure is not limited by a particular data structure, the data 208 may be stored in computer registers, in a relational database as a table having a plurality of different fields and records, XML documents, or flat files. The data 208 may also be formatted in a computer-readable format such as, but not limited to, binary values, ASCII or Unicode. By further way of example only, the data 208 may be stored as bitmaps comprised of pixels that are stored in compressed or uncompressed, or various image formats (e.g., JPEG), vector-based formats (e.g., SVG) or computer instructions for drawing graphics. Moreover, the data 208 may comprise information sufficient to identify the relevant information, such as numbers, descriptive text, proprietary codes, pointers, references to data stored in other memories (including other network locations) or information that is used by a function to calculate the relevant data.

The instructions 206 can be any set of instructions to be executed directly, such as machine code, or indirectly, such as scripts, by the processor 202. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The host device 211 may further include wireless communication interface 209, such as an antenna, transceiver, and any other devices used for wireless communication. The antenna may be, for example, a short-range wireless network antenna. The host device 211 may be able to be coupled with accessories 220, 230, 240, 250 via wireless connections 260, 262, 264, 266, respectively. For instance, the antenna may be used to transmit and receive Bluetooth signals. Thus, there may be a maximum distance between host device 211 and accessories 220, 230, 240, 250 that would allow host device 211 and accessories 220, 230, 240, 250 to be within range of each other.

Accessories 220, 230, 240, 250 may each include one or more processors 222, 232, 242, 252, memory 224, 234, 244, 254, and wireless communication interface 229, 239, 249, 259, respectively. The one or more processors, memory, and wireless communication interface of the accessories may be similar to the one or more processors 202, memory 204, and wireless communication interface 209 discussed above with respect to host device 211.

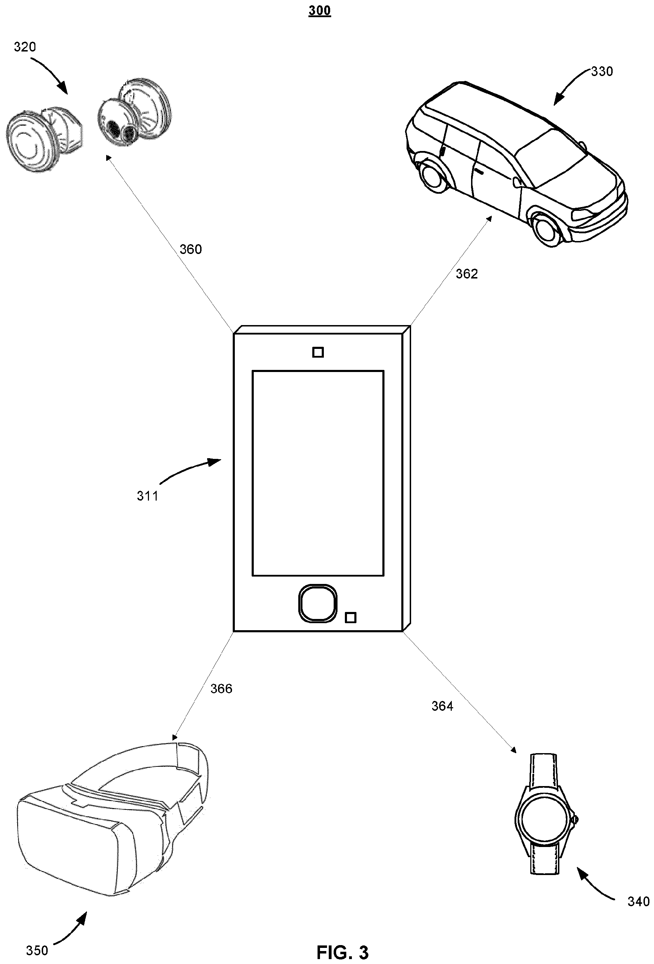

Figure 3 illustrates a system 300 including a host device simultaneously connected to multiple accessories. The host device may output or transmit different content to the connected accessories. The accessories may be categorized as primary, saved, unsaved, private, shared, etc. The host device may categorize content being output or transmitted as private or public content. According to some examples, the host device may output certain content to certain accessories based on the categorization of the content and accessories. For example, first content may be public content. Public content may be output to any accessory, regardless of the categorization of the accessory. Second content may be private content. Private content may be output to the primary or private accessories. Thus, contemporaneously, the host device may output first content to a first accessory and second content to a second accessory.

The system 300 may include a host device, such as smartphone 311. The host device may be connected to one or more accessories, such as earbuds 320, car 330, smartwatch 340, and headset 350. As shown, smartphone 311 may be wirelessly connected via wireless connections 360, 362, 364, 366 to earbuds 320, car 330, smartwatch 340, and headset 350.

The accessories may include outputs, such as speakers, displays, etc. For example, car 330 may include an audio playback system configured to output audio content streamed though smartphone 311 and transmitted to the car audio playback system. According to some examples, smartwatch 340 and/or earbuds 320 may output notifications received by smartphone 311. The notification output maybe audio, visual, or haptic notifications. For example, the notification may be a noise alerting the user of the notification, the showing of the notification on a display, a vibration alerting the user of the notification, etc. The notification output may be any combination of audio, visual, or haptic notifications.

The output from each accessory may occur simultaneously. For example, the host device may transmit first content to a first accessory and second content to a second content contemporaneously. The host device may output first content on a first channel and second content on a second channel. The channel may be based on the type of content. For example, a Message Access Profile ("MAP") may be used for the exchange of messages, or data, between the host device 311 and an accessory, a Hands-Free Profile ("HFP") may be used when the content is a phone call, or an Advanced Audio Distribution Profile ("A2DP") may be used for audio content. The HFP channel may allow the phone call to occur in real time, without a buffer period. The A2DP channel may have a buffer period that allows for high quality streaming.

According to one example, car 330 may output audio content streamed through smartphone 311 at the same time a notification received by smartphone 311 is output to smartwatch 340 and/or earbuds 320. Audio streaming or playing from smartphone 311 may be output to car 330 over a first channel. The first channel may be the A2DP channel. Notifications received by smartphone 311 may be output to smartwatch 340 and/or earbuds 320 over a second channel. The second channel may be the MAP channel. Other channels may be used based on the content being output from host device 311 to the accessories. For example, a call received by smartphone 311 may be transmitted to earbuds 320, car 330, or headset 350 via a HFP channel.

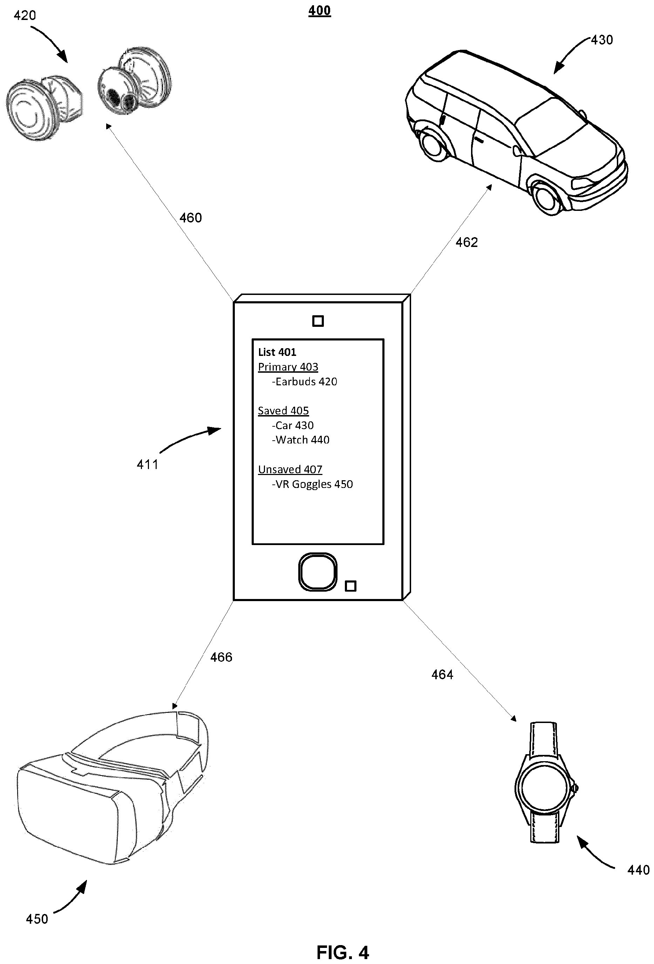

Figure 4 illustrates a system of a host device in which paired accessories are categorically stored. The host device may categorize the accessories based on the order the accessories were connected to the host device, type of accessory, user preference, etc. For example, the first accessory connected may be categorized as the primary accessory and any subsequently connected accessory may be categorized as a saved or unsaved accessory. Additionally or alternatively, the accessories may be categorized based on whether it is a private accessory intended for use by the user of the host device only or a shared accessory intended for use by the user of the host device as well as other individuals. According to some example, the user may pair and categorize the accessories.

The system 400 may include a host device, such as smartphone 411. The host device may be connected to one or more accessories. As shown, smartphone 411 may be wirelessly connected via wireless connections 460, 462, 464, 466 to earbuds 420, car 430, smartwatch 440, and headset 450, respectively.

Host device 400 may store a categorical list 401. The categorical list 401 may classify the connected accessories. Just as one example, the list 401 may categorize devices as primary devices 403, saved devices 405, and unsaved devices 407. Additionally or alternatively, the connected accessories may be categorized as priority accessories, secondary accessories, personal or private accessories, shared accessories, or the like. The list 401 may in some examples include identifiers indicating how each accessory is categorized. The identifier may be, for example, a color, an icon, text, placement of the accessory name in a particular section, heading, sub-list, etc.

According to some examples, the list 401 may be determined based on the order in which the devices or accessories are connected to the host device. In other examples, the list 401 may be determined by user input. For example, the user may provide a designation of each device or accessory after that device or accessory is connected to the host device. The list 401 may be modified by a user such that the user may change the designation of devices, add devices, or remove devices at any time.

The primary accessory 403 may be the first device or accessory connected to the host device via short-range wireless pairing. According to some examples, there may only be one primary accessory 403. The host device may automatically connect to the primary accessory 403. For example, during the out of box experience, smartphone 411 may be coupled to earbuds 420 via wireless connection 460. Thus, earbuds 420 may be the primary accessory 403 in the list 401. According to some examples, smartwatch 440 may be the first accessory connected to smartphone 411 via wireless connection 464. In such an example, smartwatch 440 may be the primary accessory 403. A user may change or determine which accessory is the primary accessory 403. For example, earbuds 420 may be the first accessory connected to smartphone 411 and, therefore, the primary accessory 403. The smartwatch 440 may be the second accessory connected to smartphone 411. The user may provide an input to change the primary accessory 403 from earbuds 420 to smartwatch 440.

The saved accessories 405 may be a subsequent device or accessory that is connected to the host device via short-range wireless pairing after the primary accessory is connected to the host device. The host device may automatically connect to the saved accessories 405. A user may designate subsequently connected accessories as a saved accessory 405. For example, car 430 may be connected to smartphone 411 via wireless connection 462 after earbuds 420 were connected to smartphone 411. Thus, if earbuds 420 was the first accessory connected to smartphone 411, car 430 may be designated as a saved accessory 405. Smartwatch 440 may be connected to smartphone 411 via wireless connection 464 after earbuds 420 were connected to smartphone 411. Thus, if earbuds 420 was the accessory device connected to smartphone 400, smartwatch 440 may be a saved accessory 405. According to some examples, the user may designate accessories as saved accessories 405 regardless of the order in which the accessory was connected to the host device.

According to some examples, accessories may be connected to the host device without being designated as a primary accessory 403 or a saved accessory 405. For example, devices or accessories may be connected to the host devices but listed in list 401 as an unsaved device 407. For example, headset 450 may be connected to smartphone 400 via wireless connection 466. If the user does not designate headset 450 as a saved accessory 405, headset 450 may be an unsaved accessory 407. Thus, headset 450 may remain in list 401 but smartphone 411 may not automatically connect to headset 450 when headset 450 is within range of smartphone 411. In some examples, smartphone 411 may automatically connect to an unsaved accessory 407. For example, if there are multiple unsaved accessories 407 in list 401, smartphone 411 may automatically connect to the most recently connected unsaved accessory 407.

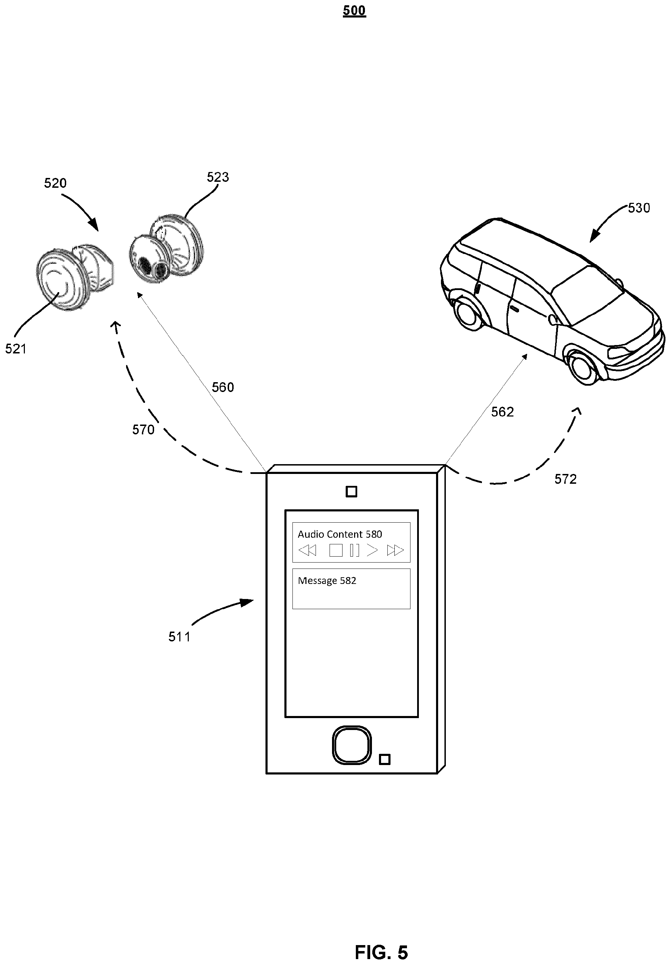

Figure 5 illustrates a system in which a host device transmits different content to each of the connected devices or accessories. The host device may be connected to the one or more accessories. Thus, the host device may be able to transmit or output different content to each accessory. For example, the host device may output first content to a first accessory and second content to a second accessory. The types of content may be different such that outputting the first content occurs on a first channel and outputting the second content occurs on a second channel. The content may be output to devices based on whether the accessory is a primary, a saved, an unsaved, a private, or shared accessory. According to some examples, the content may be output to difference accessories based on whether the content is public or private. For example, content that may require privacy, such as messages, may be output to the primary accessory or a private accessory. In some examples, where the content is public content, such as music or video, the content may be output to one or more saved or shared accessories.

The system 500 may include a host device and one or more accessories. For example, smartphone 511 may be wirelessly connected via wireless connections 560, 562, to earbuds 520 and car 530, respectively. As just one example, earbuds 520 may be categorized as a primary or private accessory and car 530 may be categorized as a saved or shared accessory. Earbuds 520 and car 530 may each include an audio playback system configured to output audio content streamed through smartphone 511 and transmitted to the car and/or earbuds audio playback system.

Smartphone 511 may output first content, such as audio content. Smartphone 511 may display the audio content 580 to be output in an application or widget on the display of smartphone 511. Information regarding the audio streaming, such as the title of the song, name of the artist, application the audio is streaming from, etc. may be shown. Controls for the audio content 580, such as rewind, stop, pause, play, and fast forward may be available. Audio content 580 may be determined to be public content, such that the user of the host device as well as individuals in the company of the user may listen to audio content 580. The audio content 580 may be transmitted to any accessory, such as the primary, saved, or unsaved accessories. For example, audio content 580 may be transmitted 572 to the audio playback system of car 530 via wireless connection 562. According to some examples, the audio content 580 may be output 572 to car 530 on the A2DP channel.

Smartphone 511 may receive a message 582. The message 582 may be received at the same time audio content 580 is being transmitted 572 to car 530. Smartphone 511 may determine which accessory to transmit a notification to regarding the received message 582. The message 582 may be categorized as private content, such that message 582 may only be output to a primary or private accessory. Smartphone 511 may transmit 570 an audio notification to the primary accessory, such as earbuds 520. In such an example, the audio content 580 to car 530 may not be interrupted. The audio notification may be transmitted 570 to earbud 520 on the MAP channel.

According to some examples, smartphone 511 may categorize the message 582 to be public content, such that the message 582 may be transmitted to any accessory. For example, smartphone 511 may transmit an audio notification of the message 582 to car 530. However, transmitting the audio notification to car 530 may interrupt the transmission of audio content 580 to car 530 and/or output of audio content 580 streamed through smartphone 511. Thus, the smartphone 511 may transmit the audio notification of message 582 to an accessory other than car 530.

Transmitting audio and notifications on different channels may reduce crosstalk. For example, first content may be transmitted on a first channel to a first accessory and second content may be transmitted on a second channel to a second accessory. Outputting the first and second content to the first and second channels, respectively, may reduce the likelihood that the first content and second content interfere with each other. Thus, crosstalk may be reduced and/or prevented. For example, the first content may be the audio content and the second content may be the notification. The first channel may be the A2DP channel and the second channel may be the MAP channel.

The host device may authenticate the user or wearer of the accessories. For example, when the accessory is earbuds or a watch, the host device may authenticate the user wearing the earbuds or watch. The authentication may occur at the time the host device or accessory is turned on, during use of the host device or accessory, or at the time content is being transmitted from the host device to the accessory. Authenticating the user or wearer of the accessory may ensure that content is transmitted the accessory one when the intended recipient is wearing or using the accessory. The authentication may be done by comparing user profiles of the host device and the accessory, requiring a passcode or fingerprint verification, etc.

For example, smartphone 511 may authenticate the user wearing earbuds 520 is the user of smartphone 511. The smartphone 511 user may be, for example, based on a user profile that was set up on smartphone 511 during the out of box experience. The smartphone 511 may authenticate the user of the earbuds 520 by comparing user profiles of the smartphone 511 and earbuds 520, requiring a touch, a fingerprint, a passcode, etc. Authentication of the user wearing earbuds 520 may ensure that notifications or messages intended for the user of smartphone 511 are only transmitted to earbuds 520 when the smartphone 511 user is wearing earbuds 520. Thus, notification and messages may not be transmitted to earbuds 520 when someone other than the owner is wearing earbuds 520. This may ensure that the message 582 reaches the intended user. In some examples, this may ensure the privacy of the notifications and messages.

According to some examples, earbuds 520 may be associated with one or more users. For example, earbuds 520 may be associated with one or more different profiles or accounts. Smartphone 511 may be associated with a profile or account. Smartphone 511 may transmit 570 notifications or message 582 to earbuds 520 when the account associated with earbuds 520 matches the account of the current user of smartphone 511. This may ensure that message 582 reaches the intended user.

In some examples, the host device may determine whether one or both earbuds 520 are being worn by a user. According to some examples, the pair of earbuds 520 may include a first earbud 521 and a second earbud 523. Each of the earbuds 521, 523 may include an Inertial Measurement Unit ("IMU") which may include one or more gyroscopes for measuring angular motions, and/or one or more accelerometers for measuring linear motions. As other examples, each of the wireless earbuds may additionally or alternatively include optical sensors (such as cameras), electrical sensors (such as capacitive sensors), magnetic sensors (such as Hall Effect sensors), positioning sensors (such as compasses), vibration sensors (such as microphones), etc. The earbuds 520 may include one or more processors for receiving sensor signals from the one or more sensors. For instance, the one or more processors may receive one or more first sensor signals from a first sensor in the first earbud 521, and receive one or more second sensor signals from a second sensor in the second earbud 523. For example, the first sensor signals may be a batch of angular velocities measured by a gyroscope in the first earbud 521 during a time period, and the second sensor signals may be a batch of angular velocities measured by a gyroscope in the second earbud 523 during the same time period. In this example, since objects attached to a same rigid body experience a same magnitude of total angular motion, detecting of shared state may be based on measurements of angular motions, such as the batches of angular velocities.

The one or more processors may compare the first sensor signals with the second sensor signals. For instance, the one or more processors may generate a difference profile between the first sensor signals and the second sensor signals. As another example, the one or more processors may perform time-based correlations between the first sensor signals and the second sensor signals. In this regard, the first sensor signals and the second sensor signals may first be synchronized to a common time base. In some examples, other processing methods, such as filtering, determining signal quality, etc., may be performed on the sensor signals before comparisons are made.

In examples where the user is only wearing only one of the pair earbuds 520, the host device, such as smartphone 511, may transmit notifications to only the earbud 521, 523 being worn. In examples where the user is wearing the pair of earbuds 520, the host device may transmit notifications to both earbud 521, 523.

Once message 582 is transmitted 570 to earbuds 520, the earbuds 520 may receive input from the user. The input may be a touch input, verbal input and/or command, etc. to interact with the message 582. For example, the user may be able to respond to message 582 via earbuds 520. In such an example, audio streaming to car 530 from smartphone 511 may not be interrupted. According to some examples, the volume of audio output 572 to car 530 may not be adjusted as the user interacts with message 582 on earbuds 520.

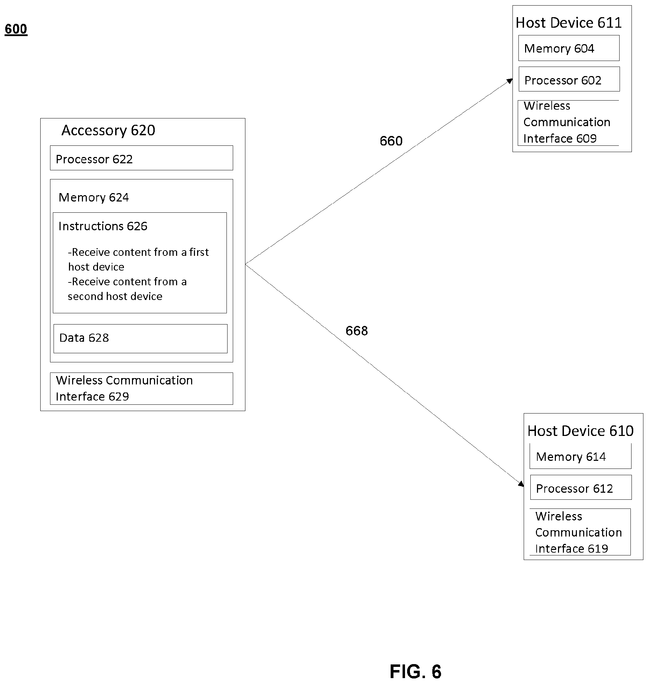

Figure 6 illustrates an example system of an accessory connected via a short range communications interface to multiple host devices. The accessory may automatically connect to the host devices when the accessory is within range of the short range communication interface. The host devices may output or transmit content to the accessory such that the accessory receives content from each host device. The accessory may, in some examples, only output content from one host device at a time. According to some examples, the accessory may switch the content being output without receiving an input, such as a user input. For example, the accessory may receive first content from a first host device. The first host device may stop transmitting first content to the accessory such that the accessory stops receiving first content. A second host device may transmit second content. The accessory may automatically receive the second content without receiving an input to switch or change host devices.

System 600 may include accessory 620 and host devices 611, 610. Accessory 620 may contain one or more processors 622, memory 624, instructions 626, data 628, and wireless communications interface 629. The one or more processors 622, memory 624, instructions 626, data 628, and wireless communications interface 629 may be similar to the one or more processors 202, memory 204, wireless communications interface 206, data 208, and an antenna 209 described with respect to Figure 2. Host devices 611, 610 may include memory 604, 614 one or more processors 602, 612, a wireless communications interface 609, 619. Memory 604, 614 one or more processors 602, 612, wireless communications interface 609, 619 may be similar to the one or more processors 202, memory 204, instructions 206, data 208, and wireless communications interface 209 described with respect to Figure 2.

Accessory 620 may be connected to host device 611 via wireless connection 660 and connected to host device 610 via wireless connection 668. Thus, accessory 620 may be capable of connecting to one or more host devices 611, 610 simultaneously. Accessory 620 may include outputs, such as speakers, displays, etc. Accessory 620 may output content transmitted to accessory 620 from host devices 610, 611.

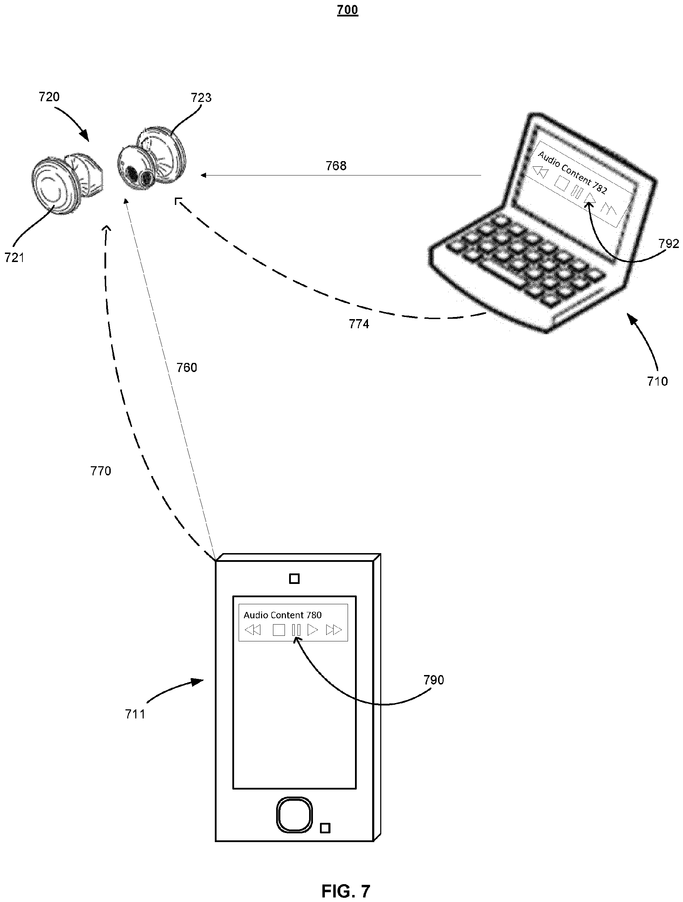

Figure 7 illustrates a system 700 of an accessory outputting content received from different host devices. The system 700 may include at least one accessory and one or more host devices. The accessory may be wirelessly connected to the one or more host devices. The accessory may include outputs, such as speakers, displays, etc., as discussed herein. The host devices may stream content and transmit the content to the accessory. A user may not have to provide an input to switch between host devices transmitting the content to the accessory.

For example, the accessory may be wireless connected to a first host device and a second host device. The accessory may include an audio playback system configured to output first audio content streamed through a first host device and transmitted to the audio playback system of the accessory. Second content may be streamed through a second host device and transmitted through an audio playback system of the second host device. When the first audio content is paused, stopped, or interrupted on the first host device, the accessory may be configured to output the second audio content streamed through the second host device and transmitted to the audio playback system of the accessory. An input, such as a touch input, voice command, etc., may not be required by the accessory to switch from receiving first content from the first host device to receiving second content from the second host device. Thus, the accessory may output the second content such that the second content is no longer output by the audio playback system of the second host device.

System 700 may include an accessory, such as earbuds 720, and one more host devices, such as smartphone 711 and laptop 710. Earbuds 720 may be simultaneously wirelessly connected to smartphone 700 and laptop 710 via wireless connections 760, 768, respectively.

According to some examples, earbuds 720 may include an audio playback system configured to output audio content streamed through smartphone 711 and laptop 710 and transmitted to the audio playback system of the earbuds 720. The host devices, smartphone 711 or laptop 710, may automatically transmit audio content to earbuds 720 once earbuds 720 are within connecting range of smartphone 711 and laptop 710. According to some examples, earbuds 720, however, may only output audio content from either smartphone 700 or laptop 710.

Smartphone 711 may transmit 770 audio content 780 to earbuds 720. The accessory may automatically receive audio content 780 without receiving an input selecting smartphone 711 as the host device to receive audio content from. The audio content 780 may be controlled by inputs provided on smartphone 711 or earbuds 720. The input may be a touch input, such as pressing play or pause 792, or a voice command. Simultaneously, audio content 782 may be output by the audio playback system of laptop 710. An input may be provided to control the playback of audio content 780. According to some examples, the input may be a touch input, such as pressing stop or pause 790, voice command, etc. Audio content 780 may stop being transmitted 770, to the audio playback system of earbuds 720. According to some examples, when audio content 782 is being transmitted to the audio playback system of laptop 710, audio content 782 may automatically be transmitted 774 to the audio playback system of earbuds 720. Thus, the earbuds 720 may output audio content 782 without receiving an input selecting laptop 710 as the host device to receive audio content from.

According to some examples, one earbud 721 may receive audio content output from a first host device and one earbud 723 may receive audio content output from a second host device. For example, earbud 721 may receive audio content 780 output 770 from smartphone 700 while earbud 723 may receive audio content 782 output 774 from laptop 710.

The accessory may receive an input, such as a touch input, a voice command, etc. The input received by the accessory may be a command to adjust the playback of the audio content, such as adjusting the volume, going to the next song, etc. The adjusted playback may be performed on the accessory regardless of which host device is transmitting the content.

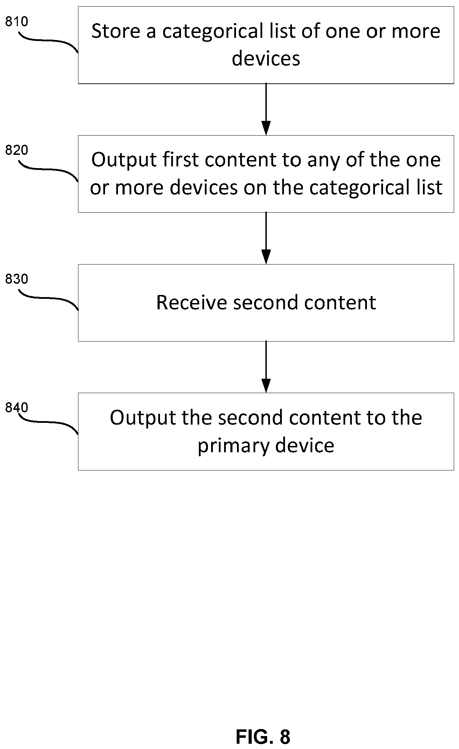

Figure 8 illustrates a sequence of steps for transmitting or outputting content to multiple accessories. For example, in block 810, a host device may store a categorical list of one or more accessories. According to one example, the categorical list may categorize the accessories as primary, saved, or unsaved accessories. Additionally or alternatively, the accessories may be categorized as priority, private or personal, secondary, shared, etc. The primary accessory may be the first accessory wirelessly connected to the host device. For example, the primary accessory may be connected to the host device during the out of box experience. The saved accessory may be any accessory subsequently connected to the host device. According to some examples, a user may categorize each accessory. Thus, the categorization as the primary accessory, saved accessory, etc. may be changed at any time.

In block 820, the host device may output first content to any one of the one or more devices on the categorical list. For example, the host device may output the first content to the primary accessory, one or more saved secondary accessories, and/or an unsaved accessory. The first content may be, for example, audio or video. According to some examples, prior to outputting the first content the host device may determine whether the first content is private or public content. Private content may be meant for the user of the host device. Public content may be content appropriate for individuals surrounding the user of the host device. The host device may determine which accessory to output the first content based on whether the content is public or private content. According to some examples, the host device may output private content to an accessory categorized as a primary or private accessory. When the content is public content, the host device may output the public content to any accessory, such as a primary, saved, private, or shared accessory.

In block 830, the host device may receive second content. The second content may be, for example, a message. The message may be a text message or e-mail. The message may be categorized as private content such that the message is intended only for the user or owner of the host device.

In block 840, the host device may output the second content to the primary device. According to some examples, host device may simultaneously output the first content to a saved device while outputting the second content to the primary device. Thus, the output of the first content may not be interrupted by the output of the second content. The first content may be output on a first channel and the second content may be output on a second channel. The first channel and second channel may be different channels. For example, audio and video content may be output on the A2DP channel and messages may be output on the MAP channel.

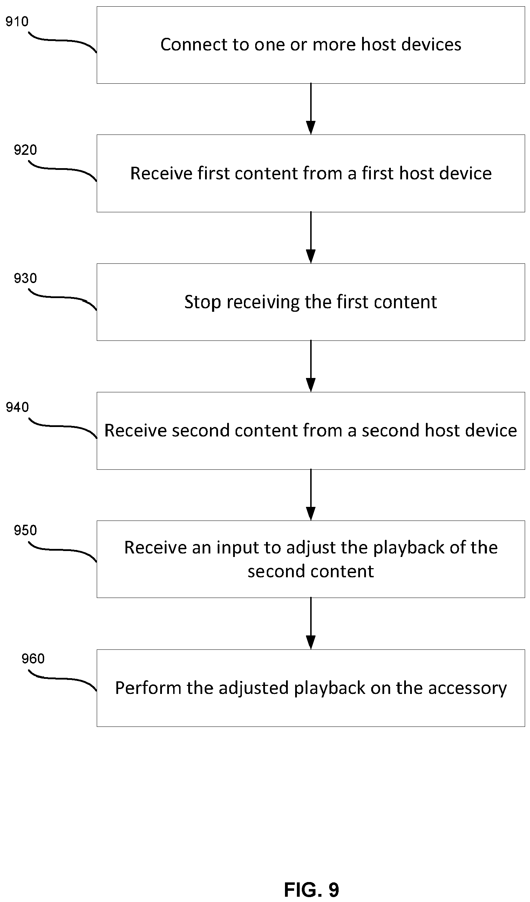

Figure 9 illustrates a sequence of steps for an accessory to output content received from multiple host devices. For example, in block 910, an accessory may connect to one or more host devices. According to some examples, the accessory may be earbuds. The earbuds may include an audio playback system configured to output audio content received from the one or more host devices. The host devices may be, for example, a smartphone, laptop, tablet, etc.

In block 920, the accessory may receive and output first content from a first host device. According to some examples, the first host device may be a smartphone or playing music. The music streaming on the smartphone may be transmitted to the audio playback system of the accessory to be output.

In block 930, the first host device may stop transmitting first content to the accessory such that the accessory may stop outputting the first content. An input may be provided to stop or pause the transmission of first content. The input may be a touch input, a voice command, etc. For example, the user may press pause or play on the music playing on the smartphone such that the smartphone no longer transmits music to the audio playback system of the earbuds.

In block 940, the accessory may output second content received from a second host device. According to some examples, the second host device may be a laptop computer. The laptop computer may be streaming or playing a video. The audio associated with the video may the second content. The earbuds may be configured to output audio content streamed through the laptop and transmitted to the audio playback system of the earbuds.

In block 950, the accessory may receive an input. The input may be a touch input, voice command, etc. The input received by the accessory may be a command to adjust the playback of the audio content. For example, a user may provide a touch input to the earbuds to increase or decrease the volume of the content being played.

In block 960, the adjusted playback may be performed on the accessory.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A host device, comprising:
a short range communications interface;
a memory categorically storing an indication of one or more accessories, including at least one primary device and one or more saved secondary devices; and
one or more processors coupled to the memory, the one or more processors being configured to:
transmit first content to any of the one or more accessories for output;
receive second content;
determine that the second content is private content;
transmit the second content to the primary device for output only by the primary device.

2. The host device of claim 1 or 2, wherein the one or more processors are further configured to automatically connect, via short-range wireless pairing, to the primary device and at least one of the one or more saved secondary devices.

3. The host device of claim 1 or 2, wherein transmitting the second content to the primary device and transmitting the first content to at least one of the one or more saved second devices occurs simultaneously.

4. The host device of any one of claims 1 to 3, wherein transmitting the first content occurs on a first channel and transmitting the second content occurs on a second channel, the first channel being different than the second channel.

5. The host device of any one of the preceding claims, wherein transmitting the second content to the primary device for output only by the primary device occurs without disrupting output of the first content by the one or more accessories.

6. The host device of any one of the preceding claims, wherein the indications of the one or more accessories further includes a category of unsaved devices.

7. The host device of any one of the preceding claims, wherein the primary device is a first accessory connected to the host device via short-range wireless pairing and the one or more saved secondary devices includes at least one subsequent accessory connected to the host device via short-range wireless pairing after the first accessory is connected to the host device.

8. The host device of any one of the preceding claims, wherein determining that the second content is private includes determining that the received second content is a message directed to a user of the host device.

9. A method for transmitting content to multiple devices, comprising:
storing, categorically by one or more processors coupled to a memory, an indication of one or more accessories, including at least one primary device and one or more saved secondary devices;
transmitting, by the one or more processors, first content to any of the one or more accessories for output;
receiving, by the one or more processors, second content;
determining, by the one or more processors, that the second content is private content;
transmitting, by the one or more processors, the second content to the primary device for output only by the primary device.

10. The method of claim 9, further comprising automatically connecting, via short range wireless pairing, to the primary device and at least one of the one or more saved secondary devices.

11. The method of claim 9 or 10, wherein transmitting the second content to the primary device and transmitting the first content to at least one of the one of the one or more saved second devices occurs simultaneously.

12. The method of any one of claims 9 to 11, wherein transmitting the first content occurs on a first channel and transmitting the second content occurs on a second channel, the first channel being different than the second channel.

13. The method of any one of claims 9 to 12, wherein the primary device is a first accessory connected to a host device via short-range wireless pairing and the one or more saved secondary devices includes at least one subsequent accessory connected to the host device via short-range wireless pairing after the first accessory is connected to the host device.

14. The method of any one of claims 9 to 13, wherein determining that the second content is private includes determining that the received second content is a message and/or transmitting the second content to the primary device for output only by the primary device occurs without disrupting output of the first content by the one or more accessories.

15. A non-transitory computer-readable medium storing instructions, which when executed by one or more processors, cause the one or more processors to:
categorically store an indication of one or more accessories, including at least one primary device and one or more saved secondary devices;
transmit first content to any of the one or more accessories for output;
receive second content;
determine that the second content is private content;
transmit the second content to the primary device for output only by the primary device.
